# FASCICULE DE BREVET EUROPEEN

(11) **EP 2 534 801 B1**
(45) Date de publication et mention de la délivrance du brevet: **21.09.2016**
(21) Numéro de dépôt: 11708919.3
(22) Date de dépôt: 10.02.2011
(51) Int. Cl.: H04L 29/06, H04L 12/761

(54) **PSEUDO-LIEN MULTIPOINT A POINT**
PSEUDOVERBINDUNG MEHRPUNKT-ZU-PUNKT
PSEUDO-LINK MULTIPOINT TO POINT

(30) Priorité: 11.02.2010 FR 1050975
(43) Date de publication de la demande: 19.12.2012
(73) Titulaire: Orange, 75015 Paris (FR)
(72) Inventeur: NIGER, Philippe, F-22300 Lannion (FR); JOUNAY, Frédéric, F-22560 Pleumeur Bodou (FR)
(86) Numéro de dépôt international: PCT/FR2011/050280
(87) Numéro de publication internationale: WO 2011/098732

(56) Documents cités:
- WO-A1-03/092226
- WO-A1-2007/022640
- US-A1- 2007 030 851

## Description

L'invention se situe dans le domaine des télécommunications, et plus particulièrement le domaine des réseaux de commutation de paquets.

Dans un réseau de commutation de paquets (ou *Packet Switched Network* (PSN) en anglais), les données à transmettre se présentent sous forme de paquets traités par des équipements de commutation du réseau jusqu'à atteindre leur destination. L'ensemble des paquets à transmettre d'une source vers une destination constitue un flux de données.

Un exemple de technologie utilisée dans les réseaux de commutation de paquets pour acheminer des paquets de données, est la technologie MPLS (*MultiProtocol Label Switching* ou en français : commutation multi-protocole par étiquette). La technologie MPLS propose de rajouter en entête des paquets de données une ou plusieurs étiquettes contenant des informations permettant aux équipements commutateurs du réseau de déterminer le prochain saut qu'un paquet doit effectuer pour atteindre sa destination. La technologie MPLS est décrite plus en détail dans un document de l'IETF (groupe de standardisation de l'Internet, abréviation des termes anglais *Internet -Engineering Task Force),* référencé RFC 3031 (RFC signifiant "requête pour commentaires", ou en anglais *Request For Comments).*

Cependant, le protocole MPLS permet d'acheminer uniquement des paquets conformes au protocole IP (*Internet Protocol,* ou protocole internet).

Afin de pallier cet inconvénient, le groupe de standardisation PWE3 (*PseudoWire Emulation Edge to Edge*) de l'IETF définit un concept de pseudo-lien permettant d'émuler un lien point à point entre deux équipements, ce lien s'appuyant sur un réseau de commutation de paquets reposant sur la technologie IP/MPLS. De tels pseudo-liens, définis dans le document RFC 3985 sous le terme de « *pseudo-wire* », permettent la transmission de paquets dé données non-conformes au protocole IP, tels que par exemple des paquets de données conformes au protocole ATM.

Le document *"Signaling Root-Initiated Point-to-Multipoint Pseudowires using LDP", draft-martini-pwe3-p2mp-pw-01.txt* propose une solution pour établir un pseudo-lien point à multipoint depuis un équipement racine vers une pluralité d'équipements de terminaison, dits équipements feuilles de façon à constituer un arbre de diffusion de données.

Dans une telle architecture, le trafic est diffusé dans le sens descendant, c'est-à-dire depuis l'équipement racine vers l'ensemble des équipements feuilles. Le trafic dans le sens remontant, c'est-à-dire depuis l'un des équipements feuilles vers l'équipement racine, s'effectue au travers d'un pseudo-lien point à point distinct établi entre cet équipement feuille et l'équipement racine.

Ainsi, il est nécessaire d'établir autant de pseudo-liens point à point qu'il y a d'équipements feuilles, ce qui constitue une perte de bande passante dommageable et engendre une complexité important pour établir et maintenir l'ensemble des pseudo-liens.

En particulier, tous les pseudo-liens point à point ayant pour extrémité l'équipement racine, ceux-ci doivent être identifiés et gérés indépendamment par l'équipement racine ce qui complique considérablement le contrôle au niveau de cet équipement. Il est en effet nécessaire de configurer individuellement chaque pseudo-lien, de maintenir une session de signalisation avec chaque équipement feuille pour la maintenance des pseudo-liens, de superviser individuellement chaque pseudo-lien ainsi établi, etc. De plus, le contrôle du volume des données à agréger au niveau de l'équipement racine est rendu plus complexe.

La demande de brevet internationale WO 2007/022640 A1 enseigne un procédé d'établissement d'un pseudo-lien multi-segment, dont les segments peuvent appartenir à des domaines différents, mais ce procédé ne permet pas d'agréger en un seul flux de données deux flux transportés respectivement par deux pseudo-liens multi-segment partageant un ou plusieurs segments.

Un des buts de l'invention est de remédier à des inconvénients de l'état de l'art.

Ainsi, l'invention a pour objet un procédé de transmission de flux de données depuis une pluralité d'équipements de terminaison, dit équipements feuilles, vers un autre équipement de terminaison, dit équipement racine, les équipements feuilles et racine constituant des extrémités d'un pseudo-lien multipoint à point s'appuyant sur un réseau de commutation de paquets auquel appartiennent les équipements de terminaison, le procédé comprenant :
- une étape de réception par un équipement commutateur, appartenant également au réseau de commutation de paquets, d'un premier flux de données émis par un premier équipement feuille à destination de l'équipement racine,
- une étape de réception par l'équipement commutateur d'un deuxième flux de données émis par un deuxième équipement feuille à destination de l'équipement racine,
- une étape d'agrégation du premier et du deuxième flux de données en un troisième flux de données, l'équipement commutateur ayant été configuré pour agréger le premier et le deuxième flux de données au moyen d'un paramètre, dit paramètre d'agrégation, compris dans une demande d'établissement du pseudo-lien,
- une étape de transmission, à destination de l'équipement racine, du troisième flux de données.

Il est ainsi possible de transmettre des flux de données au moyen d'un unique pseudo-lien établi entre les différents équipements feuilles et l'équipement racine. Une telle solution est peu consommatrice en bande passante puisqu'un unique pseudo-lien est établi entre les différents équipements de terminaison. Une telle solution permet également de simplifier les opérations de contrôle et de gestion mises en oeuvre au niveau des équipements commutateurs qui réalisent l'agrégation des flux de données ainsi que de l'équipement racine puisque ce dernier n'a plus qu'un seul pseudo-lien à gérer pour les transmissions de flux de données émis par les équipements feuilles à destination de l'équipement racine, ou transmission dans le sens remontant.

La solution objet de l'invention permet également de transmettre des flux de données de manière bidirectionnelles au travers d'un pseudo-lien établi entre un équipement racine et une pluralité d'équipements feuilles. Dans ce cas de figure, un pseudo-lien point à multipoints étant déjà établientre racine et les équipements feuilles, la solution objet de l'invention permet d'établir pseudo-lien multipoint à point dans le sens de transmission remontant permettant ainsi une communication bidirectionnelle entre l'équipement racine et les équipements feuilles.

L'invention a également pour objet un procédé d'établissement d'un pseudo-lien multipoints à point au travers duquel des flux de données sont destinés à être transmis depuis une pluralité d'équipements de terminaison, dit équipements feuilles, vers un autre équipement de terminaison, dit équipement racine, les équipements feuilles et racine constituant des extrémités du pseudo-lien, le pseudo-lien s'appuyant sur un réseau de commutation de paquets auquel appartiennent les équipements de terminaison, le procédé comprenant :
- une étape de réception par un équipement commutateur, appartenant également au réseau de commutation de paquets, d'une demande d'établissement du pseudo-lien, comprenant un identifiant de l'équipement racine, un identifiant d'au moins un équipement feuille, un identifiant du pseudo-lien et un paramètre, dit paramètre d'agrégation,
- une étape de configuration de l'équipement commutateur au moyen du paramètre d'agrégation, à l'issue de laquelle l'équipement commutateur est apte à agréger un premier flux de données émis par l'équipement feuille et un deuxième flux de données émis par un autre équipement feuille, en un troisième flux de données à destination de l'équipement racine,
- une étape de transmission, par l'équipement commutateur à destination de l'équipement, destinataire, de la demande d'établissement du pseudo-lien.

Les équipements feuilles et l'équipement racine pouvant appartenir à plusieurs pseudo-liens distincts, il est nécessaire de pouvoir identifier le pseudo-lien multipoint à point au travers duquel les flux de données émis par les différents équipements feuilles sont destinés à être transmis.

L'identifiant du pseudo-lien peut être utilisé comme paramètre d'agrégation implicite. En effet, lorsque deux flux de données sont émis respectivement par un premier et un deuxième équipement feuille à destination d'un même équipement racine et au travers d'un même pseudo-lien cela implique que l'équipement commutateur doit agréger les deux flux de données.

Une telle solution permet de configurer l'équipement commutateur afin qu'il soit apte à agréger des flux de données émis par plusieurs équipements feuilles de telle sorte que l'équipement racine ne reçoive qu'un seul flux de données.

Selon une caractéristique du procédé d'établissement objet de l'invention, la demande d'établissement ayant été émise par un premier équipement feuille, le procédé comprend, à réception par l'équipement commutateur d'une deuxième demande d'établissement du pseudo-lien émise par un deuxième équipement feuille, une étape de détermination d'une aptitude de l'équipement commutateur à agréger le premier flux de données et le deuxième flux de données en un troisième flux de données, la deuxième demande d'établissement du pseudo-lien n'étant alors pas transmise vers l'équipement racine.

Ainsi, le pseudo-lien multipoints à point est établi à l'initiative des équipements feuilles. Ce mode de réalisation permet de connecter un équipement feuille supplémentaire à un pseudo-lien multipoint à point déjà établi. Dans ce cas de figure, l'identifiant de l'équipement feuille peut être omis de la demande d'établissement du pseudo-lien.

Selon une autre caractéristique du procédé d'établissement objet de l'invention, la demande d'établissement du pseudo-lien étant émise par l'équipement racine, le procédé comprend une étape de transmission de la demande d'établissement comprenant l'identifiant de l'équipement racine, une liste comprenant les identifiant d'au moins deux équipements feuilles, l'identifiant du pseudo-lien et le paramètre d'agrégation, à destination des équipements feuilles constituant une extrémité du pseudo-lien.

Dans un tel mode de réalisation, le pseudo-lien multipoints à point est établi à l'initiative de l'équipement racine. L'établissement du pseudo-lien se fait par diffusion de proche en proche de la demande d'établissement jusqu'à atteindre l'ensemble des équipements feuilles. Dans ce mode de réalisation, le pseudo-lien est établi à partir d'une demande d'établissement unique émise par l'équipement racine. Les identifiants des équipements feuilles permettent de router la demande d'établissement au travers du réseau de commutation de paquets.

L'invention a également pour objet un équipement commutateur appartenant à un réseau de commutation de paquets auquel appartiennent également des équipements de terminaison constituant des extrémités d'un pseudo-lien multipoints à point au travers duquel des flux de données sont destinés à être transmis depuis certains équipements de terminaison, dit équipements feuilles, vers un autre équipement de terminaison, dit équipement racine, l'équipement commutateur comprenant:
- des moyens de réception par un équipement commutateur, appartenant également au réseau de commutation de paquets, d'un premier flux de données émis par un premier équipement feuille à destination de l'équipement racine,
- des moyens de réception par l'équipement commutateur d'un deuxième flux de données émis par un deuxième équipement feuille à destination de l'équipement racine,
- des moyens d'agrégation du premier et du deuxième flux de données en un troisième flux de données, l'équipement commutateur ayant été configuré pour agréger le premier et le deuxième flux de données au moyen d'un paramètre, dit paramètre d'agrégation, compris dans une demande d'établissement du pseudo-lien,
- des moyens de transmission, à destination de l'équipement racine, du troisième flux de données.

Selon une caractéristique de l'équipement commutateur objet de l'invention, celui-ci comprend :
- des moyens de réception d'une demande d'établissement du pseudo-lien, comprenant un identifiant de l'équipement racine, un identifiant d'au moins un équipement feuille, un identifiant du pseudo-lien et un paramètre, dit paramètre d'agrégation,
   - des moyens de configuration de l'équipement commutateur au moyen du paramètre d'agrégation, à l'issue de laquelle l'équipement commutateur est apte à agréger un premier flux de données émis par l'équipement feuille et un deuxième flux de données émis par un autre équipement feuille, en un troisième flux de données à destination de l'équipement racine,
   - des moyens de transmission, à destination de l'équipement, destinataire, de la demande d'établissement du pseudo-lien.

Selon une caractéristique de l'équipement commutateur objet de l'invention, les moyens de réception sont aptes à recevoir une deuxième demande d'établissement du pseudo-lien émise par un deuxième équipement feuille, la demande d'établissement ayant été émise par un premier équipement feuille, l'équipement commutateur comprend des moyens de détermination d'une aptitude de l'équipement commutateur à agréger le premier flux de données et le deuxième flux de données en un troisième flux de données destiné à être transmis vers l'équipement racine.

Selon une caractéristique de l'équipement commutateur objet de l'invention, la demande d'établissement du pseudo-lien étant émise par l'équipement racine, l'équipement commutateur comprend des moyens de transmission de la demande d'établissement à destination d'une pluralité d'équipements feuilles constituant une extrémité du pseudo-lien.

L'invention a encore pour objet un équipement de terminaison appartenant à un réseau de commutation de paquets constituant l'une des extrémités d'un pseudo-lien multipoints à point au travers duquel des flux de données sont destinés à être transmis depuis certains équipements de terminaison, dit équipements feuilles, vers un autre équipement de terminaison, dit équipement racine, l'équipement de terminaison comprenant des moyens d'émission d'une demande d'établissement du pseudo-lien, comprenant un identifiant de l'équipement de terminaison racine, un identifiant d'au moins un équipement feuille, un identifiant du pseudo-lien, un paramètre, dit paramètre d'agrégation destiné à être utilisé lors d'une étape de configuration d'un équipement commutateur appartenant également au réseau de commutation de paquets à l'issue de laquelle l'équipement commutateur est apte à agréger un premier flux de données émis par un premier équipement feuille et un deuxième flux de données émis par un deuxième équipement feuille, en un troisième flux de données.

L'invention concerne encore un signal émis par un premier équipement de terminaison appartenant à un réseau de commutation de paquets à destination d'au moins un deuxième équipement de terminaison, le premier et le deuxième équipement de terminaison constituant des extrémités d'un pseudo-lien multipoints à point au travers duquel des flux de données sont destinés à être transmis depuis certains équipements de terminaison, dit équipements feuilles, vers un autre équipement de terminaison, dit équipement racine.

Un tel signal est particulier en ce qu'il porte un message comprenant une demande d'établissement du pseudo-lien, comprenant un identifiant de l'équipement racine, un identifiant d'au moins un équipement feuille, un identifiant du pseudo-lien et un paramètre, dit paramètre d'agrégation, destiné à être utilisé lors d'une étape de configuration d'un équipement commutateur appartenant également au réseau de commutation de paquets à l'issue de laquelle l'équipement commutateur est apte à agréger un premier flux de données émis par un premier équipement feuille et un deuxième flux de données émis par un deuxième équipement feuille, en un troisième flux de données destiné à être transmis à l'équipement racine.

Selon d'autres aspects, l'invention concerne également des programmes d'ordinateur comprenant des instructions de code de programme pour la mise en oeuvre des étapes des procédés de transmission et d'établissement décrits précédemment, lorsque ces programmes sont exécutés par un ordinateur.

Chacun des programmes d'ordinateur décrits ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un ordinateur sur lequel est enregistré un programme d'ordinateur tel que décrit précédemment.

Le support d'informations peut être n'importe quelle entité ou dispositif capable de stocker le programme. Par exemple, le support peut comporter un moyen de stockage, tel qu'une ROM (pour "*Read Only Memory*"), par exemple un CD ROM ou une ROM de circuit microélectronique, ou encore un moyen d'enregistrement magnétique, par exemple une disquette (*floppy disc*) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation décrits en référence aux dessins dans lesquels :
- la figure 1 représente un pseudo-lien multipoint à point établi entre une pluralité d'équipements feuilles et un équipement racine,
- La figure 2 représente un diagramme temporel d'échange de messages entre les équipements feuilles et l'équipement racine lors de l'établissement du pseudo-lien multipoint à point selon un premier mode de réalisation de l'invention,
- La figure 3 représente un diagramme temporel d'échange de messages entre l'équipement racine et les équipements feuilles lors de l'établissement du pseudo-lien multipoint à point selon un deuxième mode de réalisation de l'invention,
- La figure 4 représente un diagramme temporel de transmission de flux de données depuis les équipements feuilles vers l'équipement racine au travers du pseudo-lien multipoint à point,
- La figure 5 représente un équipement commutateur destiné à mettre en oeuvre l'invention,
- La figure 6 représente un équipement de terminaison constituant une extrémité du pseudo-lien multipoint à point,
- Les figures 7A et 7B représentent des demandes d'établissement du pseudo-lien multipoint à point dans les premier et deuxième modes de réalisation de l'invention.

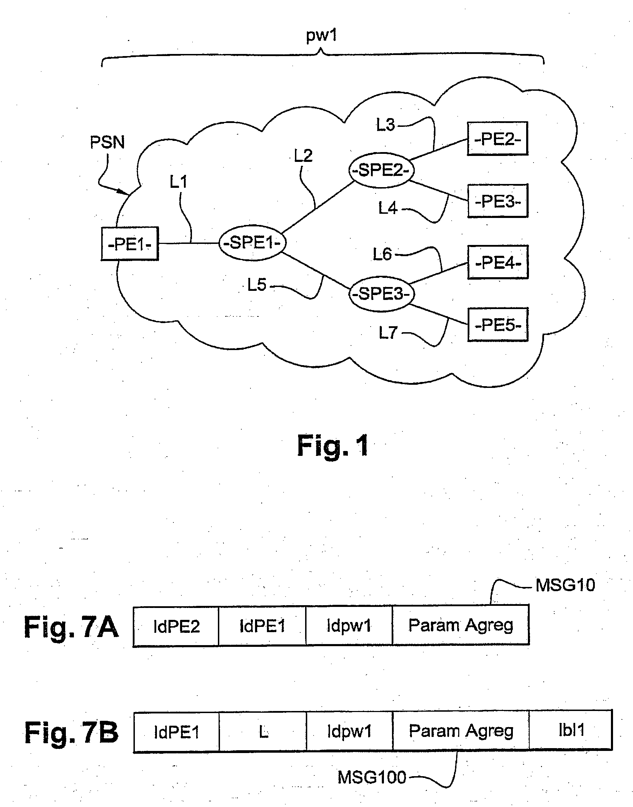

En référence à la figure 1, un pseudo-lien multipoint à point pw1 s'appuyant sur un réseau de commutation de paquets PSN, est établi entre quatre équipements de terminaison, dits équipements feuilles, PE2, PE3, PE4 et PE5 disposés en bordure du réseau PSN et un équipement de terminaison, dit équipement racine PE1, également disposé en bordure du réseau PSN. Un tel pseudo-lien pw1 est constitué d'une première liaison L1 établie entre l'équipement racine PE1 et un premier équipement commutateur SPE1, d'une deuxième liaison L2 établie entre le premier équipement commutateur SPE1 et un deuxième équipement commutateur SPE2 et d'une troisième liaison L3 établie entre le deuxième équipement commutateur SPE2 et l'équipement feuille PE2. Une quatrième liaison L4 également constitutive du pseudo-lien pw1 est établie entre le deuxième équipement commutateur SPE2 et l'équipement feuille PE3. Une cinquième liaison L5 constitutive du pseudo-lien pw1 est établie entre le premier équipement commutateur SPE1 et un troisième équipement commutateur SPE3. Une sixième liaison L6, constitutive du pseudo-lien pw1 est établie entre le troisième équipement commutateur SPE3 et l'équipement feuille PE4. Une septième liaison L7 également constitutive du pseudo-lien pw1 est établie entre le troisième équipement commutateur SPE3 et l'équipement feuille PE5.

Un tel pseudo-lien multipoint à point pw1 est destiné à transmettre des flux de données émis par les équipements feuilles PE2, PE3, PE4, PE5 à destination de l'équipement racine PE1. Les équipements de terminaison PE1, PE2, PE3, PE4, PE5 sont par exemple des noeuds IP/MPLS.

Les données constituant les flux de données émis par les équipements feuilles PE2, PE3, PE4, PE5 sont générées par des équipements clients connectés aux différents équipements feuilles non représentés sur la figure.

Un exemple d'application de l'invention est la collecte de trafic pour un réseau mobile. Dans un tel exemple, les équipements clients sont des stations de base assurant la transmission des données au travers du pseudo-lien pw1 vers l'équipement racine qui est lui-même connecté à un équipement client tels qu'un contrôleur de réseau radio ou RNC *(Radio Network Controller*).

Un tel pseudo-lien multipoint à point peut être établi à l'initiative des équipements feuilles PE2, PE3, PE4 et PE5 ou à l'initiative de l'équipement racine PE1.

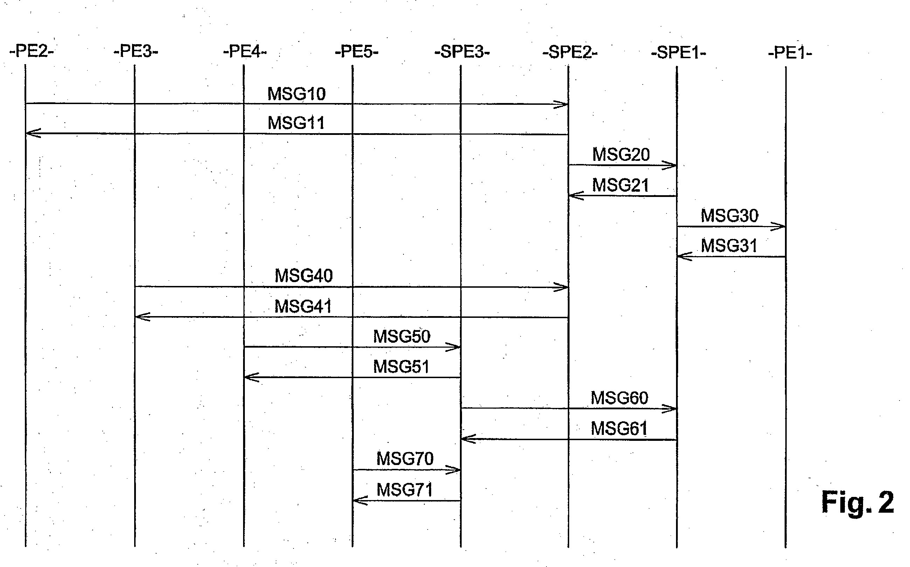

Conformément à un premier mode de réalisation de l'invention représenté à la figure 2, l'établissement du pseudo-lien multipoint à point pw1 est à l'initiative des équipements feuilles PE2, PE3, PE4 et PE5 et repose sur l'échangé de messages d'établissement entre les différents équipements impliqués.

Dans ce premier mode de réalisation, l'équipement feuille PE2 émet un premier message d'établissement MSG10 à destination de l'équipement commutateur SPE2. Un tel message MSG10 est par exemple un message du type Label Request tel que défini dans le document de l'IETF référence RFC4447. Le message MSG10 comprend une demande d'établissement du pseudo-lien pw1 comprenant un identifiant IdPE2 de l'équipement feuille PE2, un identifiant IdPE1 de l'équipement racine PE1, un identifiant du pseudo-lien pw1 Idpw1. Selon l'invention une telle demande d'établissement comprend également un paramètre d'agrégation ParamAgreg, dont la fonction est expliquée plus loin dans le document. Un tel message MSG10 est représenté à la figure 7A.

A réception du message MSG10, l'équipement commutateur SPE2 complète une table de commutation TC au moyen des informations comprises dans la demande d'établissement du pseudo-lien pw1. Une entrée est créée dans la table de commutation TC pour l'équipement feuille PE2. Cette entrée comprend l'identifiant IdPE2 de l'équipement feuille PE2, l'identifiant du pseudo-lien pw1 Idpw1, l'identifiant IdPE1 de l'équipement racine, une étiquette Ibl3 destinée à être associée aux données destinées à être émises par l'équipement feuille PE2 à destination de l'équipement commutateur SPE2, et le paramètre ParamAgreg.

A l'issue de cette étape de configuration, l'équipement commutateur SPE2 émet un message MSG11 à destination de l'équipement feuille PE2. Un tel message MSG11 est par exemple un message du type Label Mapping tel que défini dans le document de l'IETF référencé RFC4447. Le message MSG11 comprend l'identifiant IdPE2 de l'équipement feuille PE2, l'identifiant IdPE1 de l'équipement racine PE1, et l'étiquette Ibl3.

A l'issue de cette étape de configuration, l'équipement commutateur SPE2 est apte à agréger un premier flux de données émis par l'équipement feuille PE2 et un deuxième flux de données émis par un autre équipement feuille tel que l'équipement feuille PE3, en un troisième flux de données à destination de l'équipement racine PE1.

L'équipement commutateur SPE2 émet également un message MSG20 à destination de l'équipement commutateur SPE1. Un tel message MSG20 est identique au message MSG10.

L'équipement commutateur SPE2 utilise une table de routage afin de pouvoir transmettre le message MSG10 à destination de l'équipement commutateur SPE1.

A réception de ce message MSG20, l'équipement commutateur SPE1 complète une table de commutation TC au moyen des informations comprises dans la demande d'établissement du pseudo-lien pw1. Une entrée est créée dans la table de commutation TC pour l'équipement feuille PE2. Cette entrée comprend l'identifiant IdPE2 de l'équipement feuille PE2, l'identifiant du pseudo-lien pw1 Idpw1, l'identifiant IdPE1 de l'équipement racine, une étiquette Ibl2 destinée à être associée aux données destinées à être transmises par l'équipement commutateur SPE2 à destination de l'équipement commutateur SPE1, et le paramètre ParamAgreg.

A l'issue de cette étape de configuration, l'équipement commutateur SPE1 est apte à agréger un premier flux de données transmis par l'équipement commutateur SPE2 et un deuxième flux de données émis par un autre équipement commutateur tel que l'équipement commutateur SPE3, en un troisième flux de données à destination de l'équipement racine PE1.

L'équipement commutateur SPE1 émet alors un message MSG21 à destination de l'équipement commutateur SPE2. Un tel message MSG21 est par exemple un message du type Label Mapping. Le message MSG21 comprend l'identifiant IdPE2 de l'équipement feuille PE2, l'identifiant IdPE1 de l'équipement racine PE1, l'identifiant du pseudo-lien Idpw1 et l'étiquette Ibl2.

L'étiquette Ibl2 est utilisée par l'équipement commutateur SPE2 pour mettre à jour sa table de commutation.

L'équipement commutateur SPE1 émet également un message MSG30 à destination de l'équipement racine PE1. Un tel message MSG30 est identique au message MSG10.

L'équipement commutateur SPE1 utilise une table de routage afin de pouvoir transmettre le message MSG30 à destination de l'équipement racine PE1.

A réception de ce message MSG30, l'équipement racine PE1 émet un message MSG31 à destination de l'équipement commutateur SPE1. Un tel message MSG31 est par exemple un message du type Label Mapping. Le message MSG31 comprend l'identifiant IdPE2 de l'équipement feuille PE2, l'identifiant IdPE1 de l'équipement racine PE1, l'identifiant du pseudo-lien Idpw1 et une étiquette Ibl1 destinée à être associée aux données destinées à être transmises par l'équipement commutateur SPE1 à destination de l'équipement racine PE1.

L'étiquette Ibl1 est utilisée par l'équipement commutateur SPE1 pour mettre à jour sa table de commutation.

L'équipement feuille PE3 émet un premier message d'établissement MSG40 à destination de l'équipement commutateur SPE2. Un tel message MSG40 est par exemple un message du type Label Request. Le message MSG40 comprend une demande d'établissement du pseudo-lien pw1 comprenant un identifiant IdPE3 de l'équipement feuille PE3, un identifiant IdPE1 de l'équipement racine PE1, l'identifiant du pseudo-llen pw1 Idpw1 et un paramètre d'agrégation ParamAgreg.

A réception du message MSG40, l'équipement commutateur SPE2 complète la table de commutation TC au moyen des informations comprises dans la demande d'établissement du pseudo-lien pw1. Une entrée est créée dans la table de commutation TC pour l'équipement feuille PE3. Cette entrée comprend l'identifiant IdPE3 de l'équipement feuille PE3, l'identifiant du pseudo-lien pw1 Idpw1, l'identifiant IdPE1 de l'équipement racine, une étiquette Ibl4 destinée à être associée aux données destinées à être émises par de l'équipement feuille PE3 à destination de l'équipement commutateur SPE2, et le paramètre ParamAgreg.

L'équipement commutateur SPE2 émet ensuite un message MSG41 à destination de l'équipement feuille PE3. Un tel message MSG41 est par exemple un message du type Label Mapping. Le message MSG41 comprend l'identifiant IdPE3 de l'équipement feuille PE3, l'identifiant IdPE1 de l'équipement racine PE1, l'identifiant du pseudo-lien Idpw1 et l'étiquette Ibl4.

L'équipement commutateur SPE2 est déjà configuré pour agréger un premier flux de données émis par l'équipement feuille PE2 et un deuxième flux de données émis par un autre équipement feuille tel que l'équipement feuille PE3, en un troisième flux de données à destination de l'équipement racine PE1, puisqu'une entrée de la table de commutation TC comprend le paramètre d'agrégation ParamAgreg. Par conséquent la demande d'établissement du pseudo-lien pw1 ayant déjà été transmise à destination de l'équipement racine PE1, l'équipement commutateur SPE2 ne transmet pas la demande d'établissement du pseudo-lien pw1 à destination de l'équipement racine PE1. L'étiquette Ibl2 déjà allouée par l'équipement commutateur SPE1 est utilisée pour transmettre le flux de données émis par l'équipement commutateur SPE2 vers l'équipement commutateur SPE1.

L'équipement feuille PE4 émet un premier message d'établissement MSG50 à destination de l'équipement commutateur SPE3. Un tel message MSG50 est par exemple un message du type Label Request. Le message MSG50 comprend une demande d'établissement du pseudo-lien pw1 comprenant un identifiant IdPE4 de l'équipement feuille PE4, un identifiant IdPE1 de l'équipement racine PE1, l'identifiant du pseudo-lien pw1 Idpw1 et un paramètre d'agrégation ParamAgreg.

A réception du message MSG50, l'équipement commutateur SPE3 complète une table de commutation TC au moyen des informations comprises dans la demande d'établissement du pseudo-lien pw1. Une entrée est créée dans la table de commutation TC pour l'équipement feuille PE4. Cette entrée comprend l'identifiant IdPE4 de l'équipement feuille PE4, l'identifiant du pseudo-lien pw1 Idpw1, l'identifiant IdPE1 de l'équipement racine, une étiquette Ibl6 destinée à être associée aux données destinées à être émises par de l'équipement feuille PE3 à destination de l'équipement commutateur SPE3, et le paramètre ParamAgreg.

A l'issue de cette étape de configuration, l'équipement commutateur SPE3 émet un message MSG51 à destination de l'équipement feuille PE4. Un tel message MSG51 est par exemple un message du type Label Mapping. Le message MSG51 comprend l'identifiant IdPE4 de l'équipement feuille PE4, l'identifiant IdPE1 de l'équipement racine PE1, l'identifiant du pseudo-lien Idpw1 et l'étiquette Ibl6.

A l'issue de cette étape de configuration, l'équipement commutateur SPE3 est apte à agréger un premier flux de données émis par l'équipement feuille PE4 et un deuxième flux de données émis par un autre équipement feuille tel que l'équipement feuille PE5, en un troisième flux de données à destination de l'équipement racine PE1.

L'équipement commutateur SPE3 émet également un message MSG60 à destination de l'équipement commutateur SPE1. Un tel message MSG60 est identique au message MSG50.

L'équipement commutateur SPE3 utilise une table de routage afin de pouvoir transmettre le message MSG60 à destination de l'équipement commutateur SPE1 pour atteindre l'équipement racine PE1.

A réception de ce message MSG60, l'équipement commutateur SPE1 complète une table de commutation TC au moyen des informations comprises dans la demande d'établissement du pseudo-lien pw1. Une entrée est créée dans la table de commutation TC pour l'équipement feuille, PE4. Cette entrée comprend l'identifiant IdPE4 de l'équipement feuille PE4, l'identifiant du pseudo-lien pw1 Idpw1, l'identifiant IdPE1 de l'équipement racine, une étiquette Ibl5 destinée à être associée aux données destinées à être transmises par l'équipement commutateur SPE3 à destination de l'équipement commutateur SPE1, et le paramètre ParamAgreg.

L'équipement commutateur SPE1 émet alors un message MSG61 à destination de l'équipement commutateur SPE3. Un tel message MSG61 est par exemple un message du type Label Mapping. Le message MSG61 comprend l'identifiant IdPE4 de l'équipement feuille PE4, l'identifiant IdPE1 de l'équipement racine PE1, l'identifiant du pseudo-lien Idpw1 et l'étiquette Ibl5.

L'équipement commutateur SPE1 est déjà configuré pour agréger un premier flux de données émis par l'équipement commutateur SPE2 et un deuxième flux de données émis par l'équipement commutateur SPE3, en un troisième flux de données à destination de l'équipement racine PE1, puisqu'une entrée de la table de commutation TC comprend le paramètre d'agrégation ParamAgreg. Par conséquent la demande d'établissement du pseudo-lien pw1 ayant déjà été transmise à destination de l'équipement racine PE1, l'équipement commutateur SPE1 ne transmet pas la demande d'établissement du pseudo-lien pw1 à destination de l'équipement racine PE1. L'étiquette Ibl1 déjà allouée par l'équipement racine PE1 est utilisée pour transmettre le flux de données émis par l'équipement commutateur SPE1 vers l'équipement racine PE1.

L'équipement feuille PE5 émet un premier message d'établissement MSG70 à destination de l'équipement commutateur SPE3. Un tel message MSG70 est par exemple un message du type Label Request. Le message MSG70 comprend une demande d'établissement du pseudo-lien pw1 comprenant un identifiant IdPE5 de l'équipement feuille PE5, un identifiant IdPE1 de l'équipement racine PE1, un identifiant du pseudo-lien pw1 Idpw1 et un paramètre d'agrégation ParamAgreg.

A réception du message MSG70, l'équipement commutateur SPE3 complète la table de commutation TC au moyen des informations comprises dans la demande d'établissement du pseudo-lien pw1. Une entrée est créée dans la table de commutation TC pour l'équipement feuille PE5. Cette entrée comprend l'identifiant IdPE3 de l'équipement feuille PE6, l'identifiant du pseudo-lien pw1 Idpw1, l'identifiant IdPE1 de l'équipement racine, une étiquette Ibl7 destinée à être associée aux données destinées à être émises par l'équipement feuille PE5 à destination de l'équipement commutateur SPE3, et le paramètre ParamAgreg.

L'équipement commutateur SPE3 émet ensuite un message MSG71 à destination de l'équipement feuille PE5. Un tel message MSG71 est par exemple un message du type Label Mapping. Le message MSG71 comprend l'identifiant IdPE5 de l'équipement feuille PE5, l'identifiant IdPE1 de l'équipement racine PE1, l'identifiant du pseudo-lien Idpw1 et l'étiquette Ibl7.

L'équipement commutateur SPE3 est déjà configuré pour agréger un premier flux de données émis par l'équipement feuille PE4 et un deuxième flux de données émis par un autre équipement feuille tel que l'équipement feuille PE5, en un troisième flux de données à destination de l'équipement racine PE1, puisqu'une entrée de la table de commutation TC comprend le paramètre d'agrégation ParamAgreg. Par conséquent la demande d'établissement du pseudo-lien pw1 ayant déjà été transmise à destination de l'équipement racine PE1, l'équipement commutateur SPE3 ne transmet pas la demande d'établissement du pseudo-lien pw1 à destination de l'équipement racine PE1. L'étiquette Ibl5 déjà allouée par l'équipement commutateur SPE1 est utilisée pour transmettre le flux de données émis par l'équipement commutateur SPE3 vers l'équipement commutateur SPE1.

A l'issue de ces différents échanges de message, le pseudo-lien multipoint à point pw1 est établi entre les équipements feuilles PE2, PE3, PE4 et PE5 et l'équipement racine PE1.

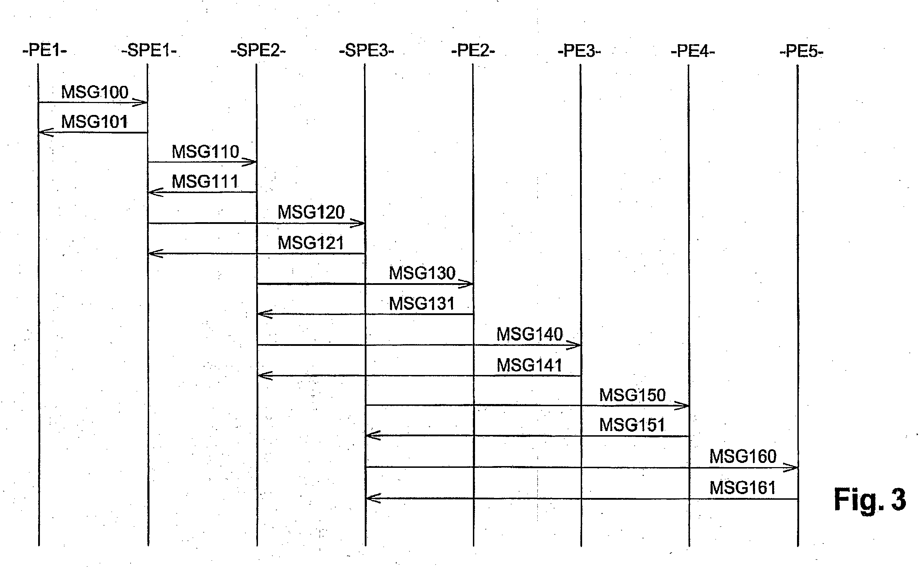

Conformément à un deuxième mode de réalisation de l'invention représenté à la figure 3, l'établissement du pseudo-lien multipoint à point pw1 est à l'initiative de l'équipement racine PE1, et repose sur l'échange de messages d'établissement entre les différents équipements impliqués.

Dans ce deuxième mode de réalisation, l'équipement racine PE1 émet un premier message d'établissement MSG100 à destination de l'équipement commutateur SPE1. Un tel message MSG100 est par exemple un message du type Label Mapping. Le message MSG100 comprend une demande d'établissement du pseudo-lien pw1 comprenant un identifiant IdPE1 de l'équipement racine PE1, une liste L comprenant les identifiants IdPE2, IdPE3, IdPE4 et IdPE5 respectifs des équipements feuilles PE2, PE3, PE4, PE5, un identifiant du pseudo-lien pw1 Idpw1, un paramètre d'agrégation ParamAgreg et une étiquette Ibl1 destinée à être associée aux données destinées à être transmises par l'équipement commutateur SPE1 à destination de l'équipement racine PE1. Un tel message MSG100 est représenté à la figure 7B.

A réception du message MSG100, l'équipement commutateur SPE1 complète la table de commutation TC au moyen des informations comprises dans la demande d'établissement du pseudo-lien pw1. Une entrée est créée dans la table de commutation TC pour les différents équipements feuilles PE2, PE3, PE4 et PE5. Par exemple, l'entrée pour l'équipement feuille PE2 comprend l'identifiant IdPE2 de l'équipement feuille PE2, l'identifiant du pseudo-lien pw1 Idpw1, l'identifiant IdPE1 de l'équipement racine et le paramètre ParamAgreg.

A l'issue de cette étape de configuration, l'équipement commutateur SPE1 est apte à agréger un premier flux de données transmis par l'équipement commutateur SPE2 et un deuxième flux de données transmis par un autre équipement commutateur tel que l'équipement commutateur SPE3, en un troisième flux de données à destination de l'équipement racine PE1. L'étiquette Ibl1 déjà allouée par l'équipement racine PE1 est utilisée pour transmettre le flux de données émis par l'équipement commutateur SPE1 vers l'équipement racine PE1.

L'équipement commutateur SPE1 émet ensuite un message MSG101 à destination de l'équipement racine PE1 acquittant la réception du message MSG101 par l'équipement commutateur SPE1.

L'équipement commutateur SPE1 émet également un message MSG110 à destination de l'équipement commutateur SPE2 et un message MSG120 à destination de l'équipement commutateur SPE3. Le message MSG110 comprend au moins les identifiants respectifs IdPE2, IdPE3, des équipements feuilles PE2 et PE3 ainsi qu'une étiquette Ibl2 destinée à être associée aux données destinées à être transmises par l'équipement commutateur SPE2 à destination de l'équipement commutateur SPE1. Le message MSG120 comprend au moins les identifiants respectifs IdPE4, IdPE5, des équipements feuilles PE4 et PE5 ainsi qu'une étiquette Ibl5 destinée à être associée aux données destinées à être transmises par l'équipement commutateur SPE3 à destination de l'équipement commutateur SPE1. L'équipement commutateur SPE1 utilise une table de routage afin de pouvoir transmettre le message MSG110 à destination de l'équipement commutateur SPE2 pour atteindre les équipements feuilles PE2 et PE3, et à destination de l'équipement commutateur SPE3 pour atteindre les équipements feuilles PE4 et PE5.

A réception du message MSG110, l'équipement commutateur SPE2 complète une table de commutation TC au moyen des informations comprises dans la demande d'établissement du pseudo-lien pw1. Une entrée est créée dans la table de commutation TC pour l'équipement feuille PE2 et l'équipement feuille PE3.

A l'issue de cette étape de configuration, l'équipement commutateur SPE2 est apte à agréger un premier flux de données transmis par l'équipement feuille PE2 et un deuxième flux de données émis par un autre équipement de terminaison tel que l'équipement feuille PE3, en un troisième flux de données à destination de l'équipement racine PE1. L'étiquette Ibl2 déjà allouée par l'équipement commutateur SPE1 est utilisée pour transmettre le flux de données émis par l'équipement commutateur SPE2 vers l'équipement commutateur SPE1.

L'équipement commutateur SPE2 émet ensuite un message MSG111 à destination, de l'équipement commutateur SPE1 acquittant la réception du message MSG110 par l'équipement commutateur SPE1.

L'équipement commutateur SPE2 émet alors un message MSG130 à destination de l'équipement feuille PE2 et un message MSG140 à destination de l'équipement feuille PE3. Le message MSG130 comprend une étiquette Ibl3 destinée à être associée aux données destinées à être transmises par l'équipement feuille PE2 à destination de l'équipement commutateur SPE2. Le message MSG140 comprend une étiquette Ibl4 destinée à être associée aux données destinées à être transmises par l'équipement feuille PE3 à destination de l'équipement commutateur SPE2.

L'équipement commutateur SPE2 utilise une table de routage afin de pouvoir transmettre les messages MSG130 et MSG140 à destination respectivement des équipements feuilles PE2 et PE3.

A réception du message MSG130, l'équipement feuille PE2 émet un message MSG131 à destination de l'équipement commutateur SPE2 acquittant la réception du message MSG130.

A réception du message MSG140, l'équipement feuille PE3 émet un message MSG141 à destination de l'équipement commutateur SPE2 acquittant la réception du message MSG140.

A réception du message MSG120, l'équipement commutateur SPE3 complète une table de commutation TC au moyen des informations comprises dans la demande d'établissement du pseudo-lien pw1. Une entrée est créée dans la table de commutation TC pour l'équipement feuille PE4 et l'équipement feuille PE5.

A l'issue de cette étape de configuration, l'équipement commutateur SPE3 est apte à agréger un premier flux de données transmis par l'équipement feuille PE4 et un deuxième flux de données émis par un autre équipement de terminaison tel que l'équipement feuille PE5, en un troisième flux de données à destination de l'équipement racine PE1. L'étiquette Ibl5 déjà allouée par l'équipement commutateur SPE1 est utilisée pour transmettre le flux de données émis par l'équipement commutateur SPE3 vers l'équipement commutateur SPE1.

L'équipement commutateur SPE3 émet ensuite un message MSG121 à destination de l'équipement commutateur SPE1 acquittant la réception du message MSG120 par l'équipement commutateur SPE1.

L'équipement commutateur SPE3 émet alors un message MSG150 à destination de l'équipement feuille PE4 et un message MSG160 à destination de l'équipement feuille PE5. Le message MSG150 comprend une étiquette Ibl6 destinée à être associée aux données destinées à être transmises par l'équipement feuille PE4 à destination de l'équipement commutateur SPE3. Le message MSG160 comprend une étiquette Ibl7 destinée à être associée aux données destinées à être transmises par l'équipement feuille PE5 à destination de l'équipement commutateur SPE3.

L'équipement commutateur SPE3 utilise une table de routage afin de pouvoir transmettre les messages MSG150 et MSG160 à destination respectivement des équipements feuilles PE4 et PE5.

A réception du message MSG150, l'équipement feuille PE4 émet un message MSG151 à destination de l'équipement commutateur SPE3 acquittant la réception du message MSG150.

A réception du message MSG160, l'équipement feuille PE5 émet un message MSG161 à destination de l'équipement commutateur SPE3 acquittant la réception du message MSG160.

A l'issue de ces différents échanges de message, le pseudo-lien multipoint à point pw1 est établi entre les équipements feuilles PE2, PE3, PE4 et PE5 et l'équipement racine PE1.

Une fois le pseudo-lien multipoint à point pw1 établi entre l'équipement racine PE1 et les équipements feuilles PE2, PE3, PE4 et PE5, celui-ci est apte à transmettre des flux de données émis par les différents équipements feuilles PE2, PE3, PE4 et PE5 à destination de l'équipement racine PE1.

Il est à noter que le premier et le deuxième mode de réalisation de l'invention peuvent être combinés. En effet, il est possible d'établir un pseudo-lien muitipoint à point pw1 à l'initiative de l'équipement racine PE1 puis de connecter au pseudo-lien pw1 un ou plusieurs équipements feuilles supplémentaires à l'initiative de ces équipements feuilles conformément au premier mode de réalisation de l'invention.

Dans un autre mode de réalisation de l'invention, les équipements commutateurs SPE1, SPE2, et SPE3 peuvent être configurés manuellement afin d'être aptes à agréger un premier flux de données transmis par un premier équipement feuille et un deuxième flux de données émis par un deuxième équipement feuille, en un troisième flux de données à destination de l'équipement racine.

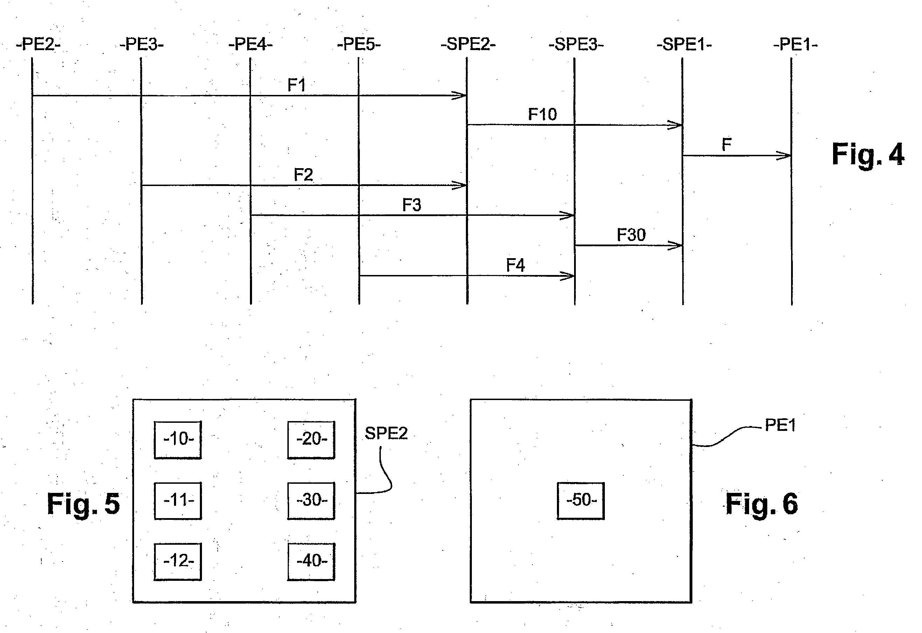

En référence à la figure 4, l'équipement feuille PE2 émet un flux de données F1 à destination de l'équipement racine PE1. L'étiquette Ibl3 est associée aux données constitutives du flux de données F1. Le flux de données F1 est reçu par l'équipement commutateur SPE2. Les données Issues du flux F1 de données sont marquées à l'aide de l'étiquette Ibl2 et forment un flux de données F10. Le flux de données F10 est ensuite transmis à destination de l'équipement commutateur SPE1. Le flux de données F10 est reçu par l'équipement commutateur SPE1. Les données issues du flux F10 de données sont marquées à l'aide de l'étiquette Ibl1 et forment un flux de données F. Le flux de données F est ensuite transmis à destination de l'équipement racine PE1.

L'équipement feuille PE3 émet un flux de données F2 à destination de l'équipement racine PE1. L'étiquette Ibl4 est associée aux données constitutives du flux de données F2. Le flux de données F2 est reçu par l'équipement commutateur SPE2.

L'équipement commutateur SPE2 ayant été configuré lors de l'établissement du pseudo-lien pw1 pour agréger plusieurs flux de données issus de différents équipements feuilles, le flux de données F1 émis par l'équipement feuille PE2 et le flux de données F2 émis par l'équipement feuille PE3 sont agrégés, par l'équipement commutateur SPE2 pour former flux de données F10. Le flux F10 ainsi généré est transmis à destination de l'équipement commutateur SPE1.

L'équipement feuille PE4 émet un flux de données F3 à destination de l'équipement racine PE1. L'étiquette Ibl6 est associée aux données constitutives du flux de données F3. Le flux de données F3 est reçu par l'équipement commutateur SPE3. Les données issues du flux F3 de données sont marquées à l'aide de l'étiquette Ibl5 et forment un flux de données F30. Le flux de données F30 est ensuite transmis à destination de l'équipement commutateur SPE1. Le flux de données F30 est reçu par l'équipement commutateur SPE1.

L'équipement feuille PE5 émet un flux de données F4 à destination de l'équipement racine PE1. L'étiquette Ibl7 est associée aux données constitutives du flux de données F4. Le flux de données F4 est reçu par l'équipement commutateur SPE3.

L'équipement commutateur SPE3 ayant été configuré lors de l'établissement du pseudo-lien pw1 pour agréger plusieurs flux de données issus de différents équipements feuilles, le flux de données F3 émis par l'équipement feuille PE4 et le flux de données F4 émis par l'équipement feuille PE5 sont agrégés, par l'équipement commutateur SPE3 pour former le flux de données F30. Le flux F30 ainsi généré est transmis à destination de l'équipement commutateur SPE1.

L'équipement commutateur SPE1 ayant été configuré lors de l'établissement du pseudo-lien pw1 pour agréger plusieurs flux de données issus de différents équipements feuilles, le flux de données F10 émis par l'équipement commutateur SPE2 et le flux de données F30 émis par l'équipement commutateur SPE3 sont agrégés, par l'équipement commutateur SPE1 pour former flux de données F. Le flux F ainsi généré est transmis à destination de l'équipement racine PE1.

Les flux de données F1, F2, F3 et F4 sont agrégés en un unique flux de données par les différents noeuds commutateurs traversés de sorte que l'équipement racine PE1 ne reçoit qu'un unique flux de données F constitué par les données émises par les différents équipements feuilles.

La figure 5 représente un équipement commutateur SPE1, SPE2, SPE3. Un tel équipement commutateur comprend :
- des moyens de réception 10 dé flux de données émis par des équipements feuilles connectés à l'équipement commutateur,
- des moyens d'agrégation 11 des différents flux de données émis par les différents équipements feuilles en un flux de données destiné à être transmis vers l'équipement racine, l'équipement commutateur ayant été configuré pour agréger plusieurs flux de données au moyen d'un paramètre, dit paramètre d'agrégation, compris dans une demande d'établissement du pseudo-lien,
- des moyens de transmission 12, à destination de l'équipement racine, du flux de données agrégé.

L'équipement commutateur comprend également:
- des moyens de réception 20 d'une demande d'établissement du pseudo-lien, comprenant un identifiant de l'équipement racine, un identifiant d'au moins un équipement feuille, un identifiant du pseudo-lien et un paramètre, dit paramètre d'agrégation,
- des moyens de configuration 30 de l'équipement commutateur au moyen du paramètre d'agrégation, à l'issue de laquelle l'équipement commutateur est apte à agréger un premier flux de données émis par l'équipement feuille et un deuxième flux de données émis par un autre équipement feuille, en un troisième flux de données à destination de l'équipement racine,
- des moyens de transmission 40, à destination de l'équipement destinataire, de la demande d'établissement du pseudo-lien.

La figure 6 représente un équipement de terminaison PE1, PE2, PE3, PE4 et PE5. Un tel équipement de terminaison comprend :
- des moyens d'émission 50 d'une demande d'établissement du pseudo-lien, comprenant un identifiant de l'équipement de terminaison racine, un identifiant d'au moins un équipement feuille, un identifiant du pseudo-lien et un paramètre, dit paramètre d'agrégation destiné à être utilisé lors d'une étape de configuration d'un équipement commutateur appartenant également au réseau de commutation de paquets à l'issue de laquelle l'équipement commutateur est apte à agréger un premier flux de données émis par un premier équipement feuille et un deuxième flux de données émis par un deuxième équipement feuille, en un troisième flux de données.

## Revendications

1. Procédé d'établissement d'un pseudo-lien multipoint à point au travers duquel des flux de données sont destinés à être transmis depuis une pluralité d'équipements de terminaison, dit équipements feuilles, vers un autre équipement de terminaison, dit équipement racine, les équipements feuilles et racine constituant des extrémités du pseudo-lien, le pseudo-lien s'appuyant sur un réseau de commutation de paquets auquel appartiennent les équipements de terminaison, le procédé comprenant :
- une étape de réception par un équipement commutateur, appartenant également au réseau de commutation de paquets, d'une demande d'établissement du pseudo-lien, comprenant un identifiant de l'équipement racine, un identifiant d'au moins un équipement feuille, un identifiant du pseudo-lien et un paramètre, dit paramètre d'agrégation,
- une étape de configuration de l'équipement commutateur au moyen du paramètre d'agrégation, à l'issue de laquelle l'équipement commutateur est apte à agréger un premier flux de données émis par l'équipement feuille et un deuxième flux de données émis par un autre équipement feuille, en un troisième flux de données à destination de l'équipement racine,
- une étape de transmission, par l'équipement commutateur à destination de l'équipement, destinataire, de la demande d'établissement du pseudo-lien.

2. Procédé d'établissement selon la revendication 1, la demande d'établissement ayant été émise par un premier équipement feuille, le procédé comprend, à réception par l'équipement commutateur d'une deuxième demande d'établissement du pseudo-lien émise par un deuxième équipement feuille, une étape de détermination d'une aptitude de l'équipement commutateur à agréger le premier flux de données et le deuxième flux de données en un troisième flux de données, la deuxième demande d'établissement du pseudo-lien n'étant alors pas transmise vers l'équipement racine.

3. Procédé d'établissement selon la revendication 1, la demande d'établissement du pseudo-lien étant émise par l'équipement racine, le procédé comprend une étape de transmission de la demande d'établissement comprenant l'identifiant de l'équipement racine, une liste comprenant les identifiants d'au moins deux équipements feuilles et le paramètre d'agrégation, à destination des équipements feuilles constituant une extrémité du pseudo-lien.

4. Procédé de transmission de flux de données depuis une pluralité d'équipements de terminaison, dit équipements feuilles, vers un autre équipement de terminaison, dit équipement racine, les équipements feuilles et racine constituant des extrémités d'un pseudo-lien multipoint à point s'appuyant sur un réseau de commutation de paquets auquel appartiennent les équipements de terminaison, le pseudo-lien ayant été établi selon un procédé d'établissement conforme à la revendication 1, le procédé de transmission comprenant :
- une étape de réception par un équipement commutateur, appartenant également au réseau de commutation de paquets, d'un premier flux de données émis par un premier équipement feuille à destination de l'équipement racine,
- une étape de réception par l'équipement commutateur d'un deuxième flux de données émis par un deuxième équipement feuille à destination de l'équipement racine,
- une étape d'agrégation du premier et du deuxième flux de données en un troisième flux de données, l'équipement commutateur ayant été configuré pour agréger le premier et le deuxième flux de données au moyen d'un paramètre, dit paramètre d'agrégation, compris dans une demande d'établissement du pseudo-lien,
- une étape de transmission, à destination de l'équipement racine, du troisième flux de données.

5. Equipement commutateur appartenant à un réseau de commutation de paquets auquel appartiennent également des équipements de terminaison constituant des extrémités d'un pseudo-lien multipoint à point au travers duquel des flux de données sont destinés à être transmis depuis certains équipements de terminaison, dit équipements feuilles, vers un autre équipement de terminaison, dit équipement racine, l'équipement commutateur comprenant :
- des moyens de réception d'une demande d'établissement du pseudo-lien, comprenant un identifiant de l'équipement racine, un identifiant d'au moins un équipement feuille, un identifiant du pseudo-lien et un paramètre, dit paramètre d'agrégation,
- des moyens de configuration de l'équipement commutateur au moyen du paramètre d'agrégation, à l'issue de laquelle l'équipement commutateur est apte à agréger un premier flux de données émis par l'équipement feuille et un deuxième flux de données émis par un autre équipement feuille, en un troisième flux de données à destination de l'équipement racine,
- des moyens de transmission, à destination de l'équipement, destinataire, de la demande d'établissement du pseudo-lien.

6. Equipement commutateur selon la revendication 5 comprenant :
- des moyens de réception par un équipement commutateur, appartenant également au réseau de commutation de paquets, d'un premier flux de données émis par un premier équipement feuille à destination de l'équipement racine,
- des moyens de réception par l'équipement commutateur d'un deuxième flux de données émis par un deuxième équipement feuille à destination de l'équipement racine,
- des moyens d'agrégation du premier et du deuxième flux de données en un troisième flux de données, l'équipement commutateur ayant été configuré pour agréger le premier et le deuxième flux de données au moyen d'un paramètre, dit paramètre d'agrégation, compris dans une demande d'établissement du pseudo-lien,
- des moyens de transmission, à destination de l'équipement racine, du troisième flux de données.

7. Equipement commutateur selon la revendication 5, dans lequel les moyens de réception d'une demande d'établissement du pseudo-lien étant aptes à recevoir une deuxième demande d'établissement du pseudo-lien émise par un deuxième équipement feuille, l'équipement commutateur comprend des moyens de détermination d'une aptitude de l'équipement commutateur à agréger le premier flux de données et le deuxième flux de données en un troisième flux de données destiné à être transmis vers l'équipement racine.

8. Equipement commutateur selon la revendication 5, la demande d'établissement du pseudo-lien étant émise par l'équipement racine, l'équipement commutateur comprend des moyens de transmission de la demande d'établissement à destination d'une pluralité d'équipements feuilles constituant une extrémité du pseudo-lien.

9. Equipement de terminaison appartenant à un réseau de commutation de paquets constituant l'une des extrémités d'un pseudo-lien multipoint à point au travers duquel des flux de données sont destinés à être transmis depuis certains équipements de terminaison, dit équipements feuilles, vers un autre équipement de terminaison, dit équipement racine, l'équipement de terminaison comprenant des moyens d'émission d'une demande d'établissement du pseudo-lien, destinée à être reçue par un équipement commutateur conforme à la revendication 5 et comprenant un identifiant de l'équipement de terminaison racine, un identifiant d'au moins un équipement feuille, un identifiant du pseudo-lien et un paramètre, dit paramètre d'agrégation destiné à être utilisé lors d'une étape de configuration de l'équipement commutateur appartenant également au réseau de commutation de paquets à l'issue de laquelle l'équipement commutateur est apte à agréger un premier flux de données émis par un premier équipement feuille et un deuxième flux de données émis par un deuxième équipement feuille, en un troisième flux de données.

10. Signal émis par un premier équipement de terminaison appartenant à un réseau de commutation de paquets à destination d'au moins un deuxième équipement de terminaison, le premier et le deuxième équipement de terminaison constituant des extrémités d'un pseudo-lien multipoint à point au travers duquel des flux de données sont destinés à être transmis depuis certains équipements de terminaison, dit équipements feuilles, vers un autre équipement de terminaison, dit équipement racine,
**caractérisé en ce que** le signal porte un message comprenant une demande d'établissement du pseudo-lien, comprenant un identifiant de l'équipement racine, un identifiant d'au moins un équipement feuille, un identifiant du pseudo-lien et un paramètre, dit paramètre d'agrégation, destiné à être utilisé lors d'une étape de configuration d'un équipement commutateur appartenant également au réseau de commutation de paquets à l'issue de laquelle l'équipement commutateur est apte à agréger un premier flux de données émis par un premier équipement feuille et un deuxième flux de données émis par un deuxième équipement feuille, en un troisième flux de données destiné à être transmis à l'équipement racine.

11. Programme d'ordinateur comprenant des instructions de code de programme pour la mise en oeuvre des étapes du procédé d'établissement selon la revendication 1 lorsque le programme est exécuté par un processeur.

12. Support d'enregistrement lisible par un équipement commutateur sur lequel est enregistré le programme selon la revendication 11.

13. Programme d'ordinateur comprenant des instructions de code de programme pour la mise en oeuvre des étapes du procédé de transmission selon la revendication 4 lorsque le programme est exécuté par un processeur.

14. Support d'enregistrement lisible par un équipement commutateur sur lequel est enregistré le programme selon la revendication 13.

## Patentansprüche

1. Verfahren zum Aufbau einer Mehrpunkt-zu-Punkt-Pseudoverbindung, über die Datenströme von einer Vielzahl von Abschlusseinrichtungen, Blatteinrichtungen genannt, an eine andere Abschlusseinrichtung, Wurzeleinrichtung genannt, übertragen werden sollen, wobei die Blatt- und Wurzeleinrichtungen Enden der Pseudoverbindung bilden, wobei die Pseudoverbindung sich auf ein Paketvermittlungsnetz stützt, zu dem die Abschlusseinrichtungen gehören, wobei das Verfahren enthält:
- einen Schritt des Empfangs einer Aufbauanforderung der Pseudoverbindung, die eine Kennung der Wurzeleinrichtung, eine Kennung mindestens einer Blatteinrichtung, eine Kennung der Pseudoverbindung und einen Aggregationsparameter genannten Parameter enthält, durch eine ebenfalls zum Paketvermittlungsnetz gehörende Vermittlungseinrichtung,
- einen Schritt der Konfiguration der Vermittlungseinrichtung mittels des Aggregationsparameters, nach dem die Vermittlungseinrichtung fähig ist, einen von der Blatteinrichtung gesendeten ersten Datenstrom und einen von einer anderen Blatteinrichtung gesendeten zweiten Datenstrom in einem für die Wurzeleinrichtung bestimmten dritten Datenstrom zu aggregieren,
- einen Schritt der Übertragung der Aufbauanforderung der Pseudoverbindung an die Zieleinrichtung durch die Vermittlungseinrichtung.

2. Aufbauverfahren nach Anspruch 1, wobei, wenn die Aufbauanforderung von einer ersten Blatteinrichtung gesendet wurde, das Verfahren bei Empfang einer von einer zweiten Blatteinrichtung gesendeten zweiten Aufbauanforderung der Pseudoverbindung durch die Vermittlungseinrichtung einen Schritt der Bestimmung einer Fähigkeit der Vermittlungseinrichtung enthält, den ersten Datenstrom und den zweiten Datenstrom in einem dritten Datenstrom zu aggregieren, wobei die zweite Aufbauanforderung der Pseudoverbindung dann nicht an die Wurzeleinrichtung übertragen wird.

3. Aufbauverfahren nach Anspruch 1, wobei, wenn die Aufbauanforderung der Pseudoverbindung von der Wurzeleinrichtung gesendet wurde, das Verfahren einen Schritt der Übertragung der die Kennung der Wurzeleinrichtung und eine die Kennungen von mindestens zwei Blatteinrichtungen und den Aggregationsparameter enthaltende Liste enthaltenden Aufbauanforderung an die Blatteinrichtungen enthält, die ein Ende der Pseudoverbindung bilden.

4. Verfahren zur Übertragung von Datenströmen von einer Vielzahl von Abschlusseinrichtungen, Blatteinrichtungen genannt, an eine andere Abschlusseinrichtung, Wurzeleinrichtung genannt, wobei die Blatt- und Wurzeleinrichtungen Enden einer Mehrpunkt-zu-Punkt-Pseudoverbindung bilden, die sich auf ein Paketvermittlungsnetz stützt, zu dem die Abschlusseinrichtungen gehören, wobei die Pseudoverbindung gemäß einem Aufbauverfahren nach Anspruch 1 aufgebaut wurde, wobei das Übertragungsverfahren enthält:
- einen Schritt des Empfangs eines von einer ersten Blatteinrichtung an die Wurzeleinrichtung gesendeten ersten Datenstroms durch eine ebenfalls zum Paketvermittlungsnetz gehörende Vermittlungseinrichtung,
- einen Schritt des Empfangs eines von einer zweiten Blatteinrichtung an die Wurzeleinrichtung gesendeten zweiten Datenstroms durch die Vermittlungseinrichtung,
- einen Schritt der Aggregation des ersten und des zweiten Datenstroms in einem dritten Datenstrom, wobei die Vermittlungseinrichtung konfiguriert wurde, den ersten und den zweiten Datenstrom mittels eines Aggregationsparameter genannten Parameters zu aggregieren, der in einer Aufbauanforderung der Pseudoverbindung enthalten ist,
- einen Schritt der Übertragung des dritten Datenstroms an die Wurzeleinrichtung.

5. Vermittlungseinrichtung, die zu einem Paketvermittlungsnetz gehört, zu dem ebenfalls Abschlusseinrichtungen gehören, die Enden einer Mehrpunkt-zu-Punkt-Pseudoverbindung bilden, über die Datenströme von bestimmten Abschlusseinrichtungen, Blatteinrichtungen genannt, an eine andere Abschlusseinrichtung, Wurzeleinrichtung genannt, übertragen werden sollen, wobei die Vermittlungseinrichtung enthält:
- Einrichtungen zum Empfang einer Aufbauanforderung der Pseudoverbindung, die eine Kennung der Wurzeleinrichtung, eine Kennung mindestens einer Blatteinrichtung, eine Kennung der Pseudoverbindung und einen Aggregationsparameter genannten Parameter enthält,
- Einrichtungen zur Konfiguration der Vermittlungseinrichtung mittels des Aggregationsparameters, nach der die Vermittlungseinrichtung fähig ist, einen von der Blatteinrichtung gesendeten ersten Datenstrom und einen von einer anderen Blatteinrichtung gesendeten zweiten Datenstrom in einem für die Wurzeleinrichtung bestimmten dritten Datenstrom zu aggregieren,
- Einrichtungen zur Übertragung der Aufbauanforderung der Pseudoverbindung an die Zieleinrichtung.

6. Vermittlungseinrichtung nach Anspruch 5, die enthält:
- Einrichtungen zum Empfang eines von einer ersten Blatteinrichtung an die Wurzeleinrichtung gesendeten ersten Datenstroms durch eine ebenfalls zum Paketvermittlungsnetz gehörende Vermittlungseinrichtung,
- Einrichtungen zum Empfang eines von einer zweiten Blatteinrichtung an die Wurzeleinrichtung gesendeten zweiten Datenstroms durch die Vermittlungseinrichtung,
- Einrichtungen zur Aggregation des ersten und des zweiten Datenstroms in einem dritten Datenstrom, wobei die Vermittlungseinrichtung konfiguriert wurde, den ersten und den zweiten Datenstrom mittels eines Aggregationsparameter genannten Parameters zu aggregieren, der in einer Aufbauanforderung der Pseudoverbindung enthalten ist,
- Einrichtungen zur Übertragung des dritten Datenstroms an die Wurzeleinrichtung.

7. Vermittlungseinrichtung nach Anspruch 5, wobei, da die Einrichtungen zum Empfang einer Aufbauanforderung der Pseudoverbindung fähig sind, eine von einer zweiten Blatteinrichtung gesendete zweite Aufbauanforderung der Pseudoverbindung zu empfangen, die Vermittlungseinrichtung Einrichtungen zur Bestimmung einer Fähigkeit der Vermittlungseinrichtung enthält, den ersten Datenstrom und den zweiten Datenstrom in einem dritten Datenstrom zu aggregieren, der dazu bestimmt ist, an die Wurzeleinrichtung übertragen zu werden.

8. Vermittlungseinrichtung nach Anspruch 5, wobei, wenn die Aufbauanforderung der Pseudoverbindung von der Wurzeleinrichtung gesendet wird, die Vermittlungseinrichtung Einrichtungen zur Übertragung der Aufbauanforderung an eine Vielzahl von Blatteinrichtungen enthält, die ein Ende der Pseudoverbindung bilden.

9. Zu einem Paketvermittlungsnetz gehörende Abschlusseinrichtung, die eines der Enden einer Mehrpunkt-zu-Punkt-Pseudoverbindung bildet, über die Datenströme von bestimmten Abschlusseinrichtungen, Blatteinrichtungen genannt, an eine andere Abschlusseinrichtung, Wurzeleinrichtung genannt, übertragen werden sollen, wobei die Abschlusseinrichtung Einrichtungen zum Senden einer Aufbauanforderung der Pseudoverbindung enthält, die dazu bestimmt ist, von einer Vermittlungseinrichtung nach Anspruch 5 empfangen zu werden und eine Kennung der Wurzel-Abschlusseinrichtung, eine Kennung mindestens einer Blatteinrichtung, eine Kennung der Pseudoverbindung und einen Aggregationsparameter genannten Parameter enthält, der dazu bestimmt ist, bei einem Konfigurationsschritt der ebenfalls zum Paketvermittlungsnetz gehörenden Vermittlungseinrichtung verwendet zu werden, nach dem die Vermittlungseinrichtung fähig ist, einen von einer ersten Blatteinrichtung gesendeten ersten Datenstrom und einen von einer zweiten Blatteinrichtung gesendeten zweiten Datenstrom in einem dritten Datenstrom zu aggregieren.

10. Von einer ersten zu einem Paketvermittlungsnetz gehörenden Abschlusseinrichtung an mindestens eine zweite Abschlusseinrichtung gesendetes Signal, wobei die erste und die zweite Abschlusseinrichtung Enden einer Mehrpunkt-zuPunkt-Pseudoverbindung bilden, über die Datenströme von bestimmten Abschlusseinrichtungen, Blatteinrichtungen genannt, an eine andere Abschlusseinrichtung, Wurzeleinrichtung genannt, übertragen werden sollen,
**dadurch gekennzeichnet, dass** das Signal eine Mitteilung trägt, die eine Aufbauanforderung der Pseudoverbindung enthält, die eine Kennung der Wurzeleinrichtung, eine Kennung mindestens einer Blatteinrichtung, eine Kennung der Pseudoverbindung und einen Aggregationsparameter genannten Parameter enthält, der dazu bestimmt ist, bei einem Konfigurationsschritt einer ebenfalls zum Paketvermittlungsnetz gehörenden Vermittlungseinrichtung verwendet zu werden, nach dem die Vermittlungseinrichtung fähig ist, einen von einer ersten Blatteinrichtung gesendeten ersten Datenstrom und einen von einer zweiten Blatteinrichtung gesendeten zweiten Datenstrom in einem dritten Datenstrom zu aggregieren, der dazu bestimmt ist, an die Wurzeleinrichtung übertragen zu werden.

11. Computerprogramm, das Programmcodeanweisungen zur Anwendung der Schritte des Aufbauverfahrens nach Anspruch 1 enthält, wenn das Programm von einem Prozessor ausgeführt wird.

12. Von einer Vermittlungseinrichtung lesbarer Aufzeichnungsträger, auf dem das Programm nach Anspruch 11 aufgezeichnet ist.

13. Computerprogramm, das Programmcodeanweisungen zur Anwendung der Schritte des Übertragungsverfahrens nach Anspruch 4 enthält, wenn das Programm von einem Prozessor ausgeführt wird.

14. Von einer Vermittlungseinrichtung lesbarer Aufzeichnungsträger, auf dem das Programm nach Anspruch 13 aufgezeichnet ist.

## Claims

1. Method for establishing a multipoint-to-point pseudowire via which data streams are intended to be transmitted from a plurality of terminating devices, called leaf devices, toward another terminating device, called the root device, the leaf and root devices forming ends of the pseudowire, the pseudowire being based on a packet switched network to which the terminating devices belong, the method comprising:
- a step in which a switching device, also belonging to the packet switched network, receives a request for the establishment of the pseudowire, comprising an identifier of the root device, an identifier of at least one leaf device, an identifier of the pseudowire, and a parameter called the aggregation parameter,
- a step in which the switching device is configured by means of the aggregation parameter, at the end of which the switching device is capable of aggregating a first data stream sent by the leaf device and a second data stream sent by another leaf device into a third data stream to be sent to the root device,
- a step in which the switching device transmits the request for the establishment of the pseudowire to the destination device.

2. Establishment method according to Claim 1, the request for establishment having been sent by a first leaf device, the method comprises, on reception by the switching device of a second request for establishment of the pseudowire sent by a second leaf device, a step of determining the capacity of the switching device to aggregate the first data stream and the second data stream into a third data stream, the second request for establishment of the pseudowire not being transmitted toward the root device in this case.

3. Establishment method according to Claim 1, the request for the establishment of the pseudowire having been sent by the root device, the method comprises a step of transmission of the establishment request, comprising the identifier of the root device, a list comprising the identifiers of at least two leaf devices, and the aggregation parameter, toward the leaf devices forming an end of the pseudowire.

4. Method of transmitting data streams from a plurality of terminating devices, called leaf devices, toward another terminating device, called a root device, the leaf and root devices forming the ends of a multipoint-to-point pseudowire based on a packet switched network to which the terminating devices belong, the pseudowire having been established according to an establishment method in accordance with Claim 1, the transmission method comprising:
- a step in which a switching device, also belonging to the packet switched network, receives a first data stream sent by a first leaf device toward the root device,
- a step in which the switching device receives a second data stream sent by a second leaf device toward the root device,
- a step in which the first and second data streams are aggregated into a third data stream, the switching device having been configured to aggregate the first and second data streams by means of a parameter called the aggregation parameter, included in a pseudowire establishment request,
- a step in which the third data stream is transmitted toward the root device.

5. Switching device belonging to a packet switched network which also includes terminating devices forming ends of a multipoint-to-point pseudowire via which data streams are intended to be transmitted from certain terminating devices, called leaf devices, toward another terminating device, called the root device, the switching device comprising:
- means for receiving a request for the establishment of the pseudowire, comprising an identifier of the root device, an identifier of at least one leaf device, an identifier of the pseudowire, and a parameter called the aggregation parameter,
- means for configuring the switching device by means of the aggregation parameter, at the end of which the switching device is capable of aggregating a first data stream sent by the leaf device and a second data stream sent by another leaf device into a third data stream to be sent to the root device,
- means for transmitting the request for the establishment of the pseudowire toward the destination device.

6. Switching device according to Claim 5, comprising:
- means by which a switching device, also belonging to the packet switched network, receives a first data stream sent by a first leaf device toward the root device,
- means by which the switching device receives a second data stream sent by a second leaf device toward the root device,
- means by which the first and second data streams are aggregated into a third data stream, the switching device having been configured to aggregate the first and second data streams by means of a parameter called the aggregation parameter, included in a pseudowire establishment request,
- means by which the third data stream is transmitted toward the root device.

7. Switching device according to Claim 5, wherein, the means for receiving a request for the establishment of the pseudowire being capable of receiving a second request for the establishment of the pseudowire sent by a second leaf device, the switching device comprises means for determining a capacity of the switching device to aggregate the first data stream and the second data stream into a third data stream to be transmitted toward the root device.

8. Switching device according to Claim 5, wherein, after the request for the establishment of the pseudowire has been sent by the root device, the switching device comprises means for transmitting the establishment request toward a plurality of leaf devices forming an end of the pseudowire.

9. Terminating device belonging to a packet switched network and forming one of the ends of a multipoint-to-point pseudowire via which data streams are to be transmitted from certain terminating devices, called leaf devices, toward another terminating device, called the root device, the terminating device comprising means for sending a request for the establishment of the pseudowire, which request is intended to be received by a switching device in accordance with Claim 5 and comprising an identifier of the root terminating device, an identifier of at least one leaf device, an identifier of the pseudowire, and a parameter, called an aggregation parameter, for use in a step of configuration of the switching device which also belongs to the packet switched network, at the end of which step the switching device is capable of aggregating a first data stream sent by a first leaf device and a second data stream sent by a second leaf device into a third data stream.

10. Signal sent by a first terminating device, belonging to a packet switched network, toward at least a second terminating device, the first and second terminating devices forming ends of a multipoint-to-point pseudowire via which data streams are to be transmitted from certain terminating devices, called leaf devices, toward another terminating device, called the root device,
**characterized in that** the signal carries a message comprising a request for establishment of the pseudowire, comprising an identifier of the root device, an identifier of at least one leaf device, an identifier of the pseudowire and a parameter, called the aggregation parameter, intended for use in a step of configuration of a switching device which also belongs to the packet switched network, at the end of which step the switching device is capable of aggregating a first data stream sent by a first leaf device and a second data stream sent by a second leaf device into a third data stream to be transmitted to the root device.

11. Computer program comprising program code instructions for implementing the steps of the establishment method according to Claim 1 when the program is executed by a processor.

12. Recording medium, readable by a switching device, on which the program according to Claim 12 is recorded.

13. Computer program comprising program code instructions for implementing the steps of the transmission method according to Claim 4 when the program is executed by a processor.

14. Recording medium readable by a switching device, on which the program according to Claim 13 is recorded.
